# EUROPEAN PATENT SPECIFICATION

(11) **EP 1 666 312 B1**
(45) Date of publication and mention of the grant of the patent: **26.03.2008**
(21) Application number: 05025669.2
(22) Date of filing: 24.11.2005
(51) Int. Cl.: B60R 21/055, B60K 37/06

(54) **Impact absorbing panel unit of a vehicle interior**
Aufprallweiche Abdeckeinheit für einen Fahrzeuginnenraum
Panneau pour intérieur véhicule absorbant un impact

(30) Priority: 06.12.2004 JP 2004352797
(43) Date of publication of application: 07.06.2006
(73) Proprietor: ALPS ELECTRIC CO., LTD., Tokyo 145-8501 (JP)
(72) Inventor: Sato, Takashi, Ota-ku Tokyo 145-8501 (JP)
(74) Representative: Klunker . Schmitt-Nilson . Hirsch

(56) References cited:
- EP-A- 1 248 274
- US-A- 4 051 916
- US-A- 5 235 648

## Description

### BACKGROUND OF THE INVENTION

### 1. Field of the Invention

The present invention relates to a panel unit according to the preamble of claim 1. It is used in a vehicle for adjusting sound volume of an audio system or air volume of an air conditioner system or the like. Particularly, it relates to a panel unit having an impact absorbing construction which absorbs an impact applied on the panel unit.

### 2. Description of the Related Art

Various electric components such as rotary switches, push button switches used for adjusting sound volume of an audio system or air volume of an air conditioner system are mounted in a vehicle, these electric components are designed to be operated as an occupant manually operates operation knobs.

Such electric components for a vehicle are mounted on a printed board inside an operation panel unit, which is mounted so as to be exposed to a predetermined mounting surface such as an instrument panel. Generally, as an occupant manually operates a protruding member, such as rotary knobs or push knobs, protruding from an operation surface of the panel unit, the above-described rotary switches and push button switches or the like are operated. In this case, the height of the rotary knobs and the push knobs protruding from the mounting surface is set relatively low in consideration of safety at the time of a collision or sudden braking of a vehicle. In general, the protrusion height of the protruding member, such as rotary knobs and the push knobs from the mounting surface does not exceed 9.5 mm.

Conventionally, as an example of such a kind of a panel unit, a panel unit has been proposed (for example, see JP-A-2003-11744 (Claims 8 to 10, Figs. 9 to 11)). In the panel, a plurality of mounting pieces having grooves protrudes from the side surfaces of a housing made of synthetic resin. As the respective mounting pieces are fixed in a supporting member of a vehicle by using respective mounting screws, the housing is assembled so as to be exposed to a predetermined mounting surface. When the pressure over a predetermined value is applied on the housing after assembly, the grooves of the mounting pieces are ruptured so that the housing is buried in a direction in which the pressure is applied.

Since the panel unit has the above-described construction in which a large impact on the housing can be absorbed, safety can be ensured at the time of a collision or sudden braking of a vehicle. However, in this case, a groove is located on each of the mounting pieces protruding from the housing made of synthetic resin and the housing is injection-molded by using molds. Accordingly, when the melted resin is flown from a predetermined gate to a cavity corresponding to each of the mounting pieces, a smooth flow of the melted resin inhibited by the narrow portion corresponding to the groove. As a result, there are problems that the flatness of the fixing surface coming in contact with a supporting member of each of the mounting pieces is easy to deteriorate after the molding, and a mounting accuracy of the housing with respect to the supporting member deteriorate.

A panel unit according to the preamble of claim 1 is known from EP-A 1 248 274. In this prior art panel unit, all mounting pieces are provided with grooves, which are ruptured at a time when a pressure over a predetermined value is applied on to protruding member so that the housing can be buried in a direction in which the pressure is applied.

### SUMMARY OF THE INVENTION

The invention has been made to solve the above-mentioned problems, and it is an object of the invention to provide a panel unit, which can secure safety and improve a mounting accuracy of a housing.
In order to solve the above-mentioned problems, according to the invention, a panel unit includes the features of claim 1.

In the panel unit having the above structure, when the housing, which has a plurality of mounting pieces and is made of synthetic resin, is molded by molds, even though flatnesses of fixing surfaces coming in contact with the supporting members of the mounting pieces having the grooves deteriorate, flatnesses of only some of the mounting pieces deteriorate. For this reason, it is possible to ensure flatnesses of the other mounting pieces not having the grooves. Therefore, when each of the mounting pieces is fixed to the supporting members of the vehicle, the mounting accuracy can be practically managed by the mounting pieces not having the grooves and thus the mounting accuracy of the housing can be improved. In addition, even though only some of the plurality of mounting pieces is provided with grooves, the grooves can be certainly ruptured at a time when a pressure over a predetermined value is applied on the mounting pieces by appropriately adjusting depth of the grooves. Accordingly, it is possible to insure safety at the time of a collision or sudden braking of a vehicle.

In the above-mentioned structure, it is preferable that the only mounting pieces in the vicinity of the protruding member be provided with the grooves. When such a structure is employed, the pressure applied on the protruding member can be concentrated on the mounting pieces having the grooves. For this reason, since the rupture strength can be set relatively high, it is possible to reduce the molding distortion of the mounting pieces at the time when the housing is molded, and then to improve the flatnesses of fixing surfaces coming in contact with the supporting members of the mounting pieces having the grooves. Therefore, it is further improve the mounting accuracy of the housing.

The panel unit having the above-mentioned structure includes a backplate of the vehicle provided on the back side of the housing, and the mounting pieces not provided with the grooves are disposed on the opposite side to the mounting pieces provided with the grooves across the protruding member, and a chamfer portion is provided on a lower surface of the housing in the vicinity of the mounting pieces provided with the grooves. When such a structure is employed, the mounting pieces in the vicinity of the protruding member are ruptured at the time when the pressure over a predetermined value is applied on the mounting pieces, and thus the housing is pivotally supported by the mounting pieces not having the grooves as a pivot so that the protruding member is buried in the vehicle. Furthermore, when the housing is pivoted, it is prevent the housing from being coming in contact with the backplate at a small rotation angle, and thus it is possible to ensure the sufficient rotation angle of the housing. Therefore, even though the backplate of the vehicle is provided close to the back side of the housing, it is possible to ensure safety by reliably burying the protruding member toward the outside of an interior of the vehicle.

### BRIEF DESCRIPTION OF THE DRAWINGS

Fig. 1 is a plan view showing a panel unit according to a first embodiment of the invention;
Fig. 2 is a cross-sectional view showing a state in which the panel unit is mounted on an instrument panel;
Fig. 3 is a left side view showing the panel unit;
Fig. 4 is a plan view showing a panel unit according to a second embodiment of the invention; and
Fig. 5 is a left side view showing the panel unit.

### DESCRIPTION OF THE PREFERRED EMBODIMENT

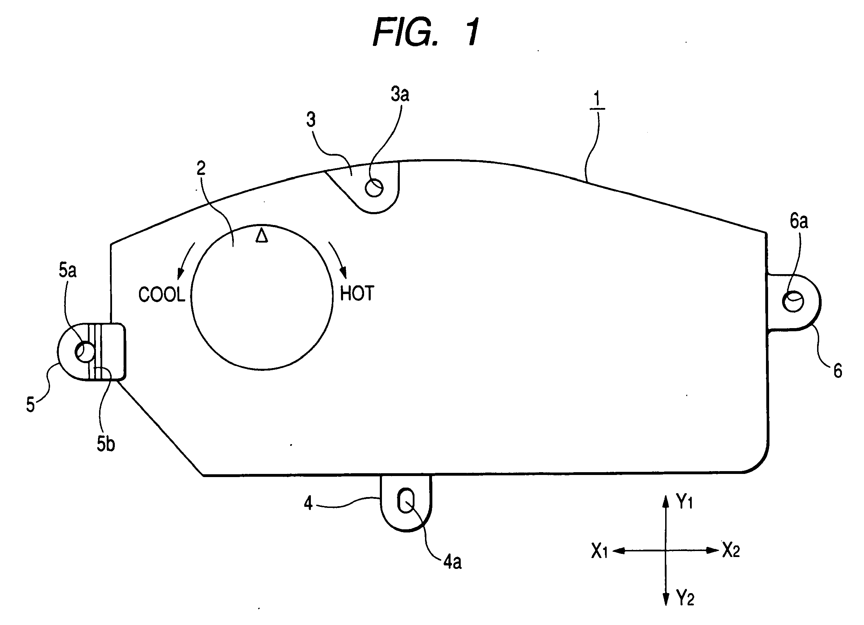

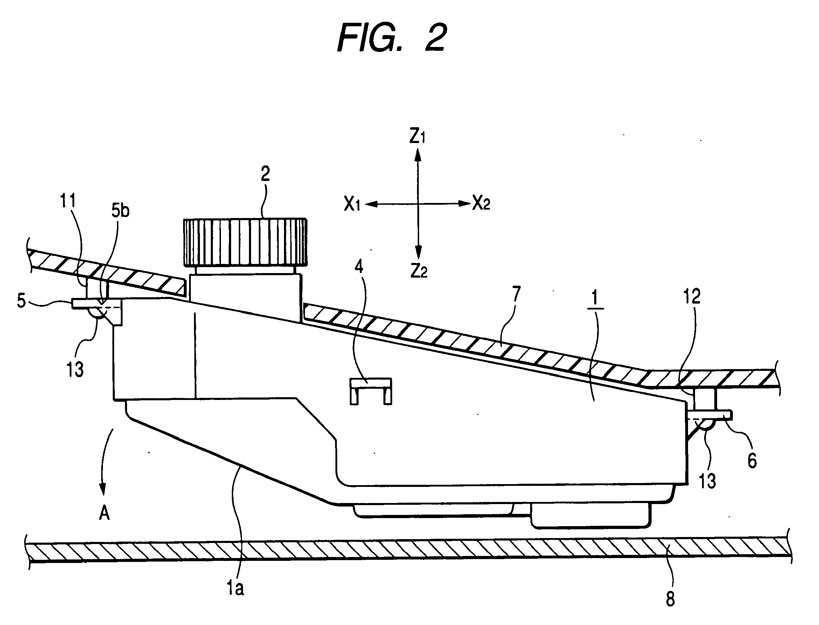

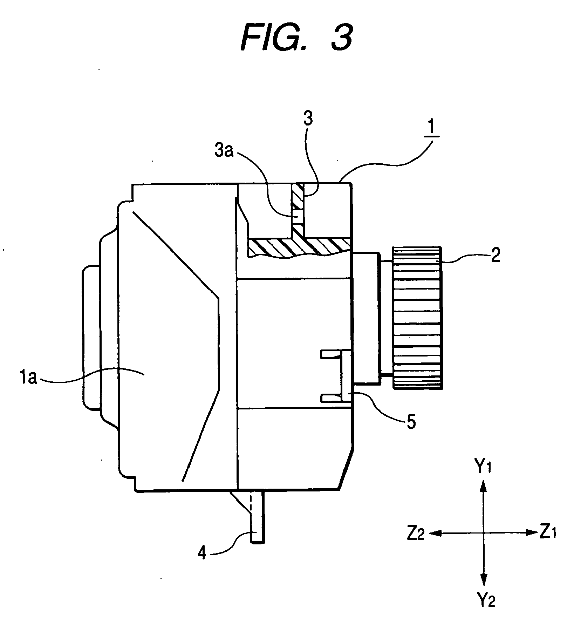

Hereinafter, embodiments of the invention will be described with reference to accompanying drawings. Fig. 1 is a plan view showing a panel unit according to a first embodiment of the invention. Fig. 2 is a cross-sectional view showing a state in which the panel unit is mounted on an instrument panel. Fig. 3 is a left side view showing the panel unit. In these drawings, X1-X2 direction indicates a horizontal direction, Y1-Y2 direction indicates a vertical direction, and Z1-Z2 direction indicates forward/rearward direction.

In the drawings, reference numeral 1 comprehensively indicates a housing made of synthetic resin. A rotary switch (not shown) is provided in the housing 1, and rotary knob (protruding member) 2 for operating the rotary switch protrudes on the front face of the housing 1 at the left end thereof in the horizontal direction. Mounting pieces 3, 4, 5, and 6, which have through holes 3a, 4a, 5a, and 6a at the center thereof, respectively, protrude on the upper, lower, left and right side faces of the housing 1. Three mounting pieces 4, 5, and 6 of the mounting pieces 3 to 6 protrude to the outside of the housing 1, and the rest, that is, the mounting piece 3 is formed by making a part of the housing 1 thinner. In addition, the mounting piece 5 formed on the left side of the housing is disposed close to the rotary knob 2, and the mounting piece 6 formed on the right side of the housing is disposed on the opposite side to the mounting piece 5 across the rotary knob 2. Furthermore, the mounting piece 5 has a V-shaped groove 5b thereon, which is formed in the vertical direction, and a chamfer portion 1a is provided on a lower surface of the housing 1 in the vicinity of the mounting piece 5 provided with the V-shaped groove 5b.

Here, since the housing 1 is injection-molded by using molds, the mounting pieces 3 to 6 are integrally formed on the housing at the time when the housing 1 is formed. When the melted resin is flown from a predetermined gate of the molds to a cavity corresponding to the mounting piece 5 during the molding of the housing 1, a smooth flow of the melted resin inhibited by the narrow portion corresponding to the groove. As a result, the mounting piece 5 I easily distorted after the molding. However, since each of the mounting pieces 3, 4, and 5 other than the mounting piece 5 is not provided with the groove, it is possible to form the mounting pieces 3, 4, and 5 with predetermined dimension accuracy.

As shown in Fig. 2, the housing 1 is disposed between the instrument panel 7 in the interior of the vehicle and a backplate 8 of the vehicle provided on the back side of the instrument panel 7, and is mounted on the instrument panel 7 by each of the mounting pieces 3, 4, 5, and 6. That is, the instrument panel 7 is provided with an opening 7a, and bosses 9, 10, 11, and 12 (bosses 9 and 10 are omitted) corresponding to the respective mounting pieces 3, 4, 5, and 6 protrude on the rear face of the instrument panel 7. In this case, mounting screws 13 indicated by reference numerals 13 are inserted into the through holes 3a, 4a, 5a, and 6a from the rear side, and then are screwed into the bosses 9 to 12 so that the housing 1 is assembled on the instrument panel 7. The rotary knob 2 provided on the housing 1 protrudes from the opening 7a so as to be exposed to an interior of the vehicle. In this case, the height of the knob protruding from the front face of the instrument panel 7 is set not to exceed 9.5 mm in consideration of safety at the time of a collision or sudden braking of the vehicle.

Even though flatness of a fixed surface, to be contacted to the boss 11 of the mounting piece 5 having the V-shaped groove 5b, is lowered as such when the housing 1 is assembled, the rest three mounting pieces 3, 4 and 6 still ensure to have high flatness. Therefore, while the respective mounting pieces 3 to 6 are fixed by the bosses 9 to 12, mounting accuracy can be substantially regulated by the mounting pieces 3, 4 and 6 in which a groove is not formed, whereby mounting accuracy of the housing 1 with respect to the instrument panel 7 can be improved.

In the panel unit constructed as described above, when an occupant properly rotates a rotation knob 2 which protrudes from the front surface of the instrument panel 7, the rotary switch operates in conjunction with the rotation knob 2 which is rotated, and then a panel signal is output from the rotary switch corresponding to a rotation direction and a rotation amount of the rotation knob 2. Thus, for example, temperature of an air-conditioning system can be adjusted on the basis of the output signal. In the usual state of an operation, since the rotation knob 2 relatively protrudes significantly from the front surface of the instrument panel 7, an occupant can easily operates the rotation knob 2, which improves operability.

Here, when pressure over a predetermined value is applied on the rotation knob 2, the mounting piece 5 having the V-shaped groove 5b is ruptured. Then, by rotating the housing 2 in a direction indicated with an arrow A of Fig. 2 around a line which connects the mounting pieces 3 and 4 in which a groove is not formed, the rotation knob 2 is buried inside the instrument panel 7 so as to ensure safety at the time of collision and sudden brake. In addition, the mounting piece 6 is slightly floated in an external direction of the instrument panel 7. Similar to the preferred embodiment, even though only one mounting piece 5 among the four mounting pieces 3 to 6 forms the V-shaped groove 5b, the V-shaped groove 5b can be reliably ruptured when pressure over a predetermined value is applied on the rotation knob 2, by properly adjusting the depth of the V-shaped groove 5b.

When the mounting piece 5 having the V-shaped groove 5b is disposed around the rotation knob 2, the pressure applied on the rotation knob 2 can be concentrated on the mounting piece 5. Therefore, even though rupture strength of the mounting piece 5 is set comparatively high, the groove can be reliably ruptured when pressure over a predetermined value is applied on a convex member. By this, since the depth of the V-shaped groove 5b of the mounting piece 5 can be set relatively small, the flatness of the fixed surface to be contacted to the boss 11 can be increased by preventing the mounting piece 5 from being distorted while molding the housing 1, thus further improving the mounting accuracy of the housing 1.

In the present embodiment, when pressure over a predetermined value is applied on the rotation knob 2 so as to rotate the housing, the housing 1 is prevented from being contacted to a backplate 8 with a small amount of rotation by a chamfer 1a formed on the bottom surface of the housing 1 so as to ensure a sufficient amount of rotation of the housing 1. Thus, as shown in Fig. 2, in spite of a limited space in which the backplate 8 is adjacently disposed to the bottom surface of the housing 1, the rotation knob 2 can be reliably buried in the instrument panel 7 at the time of collision, thus ensuring safety.

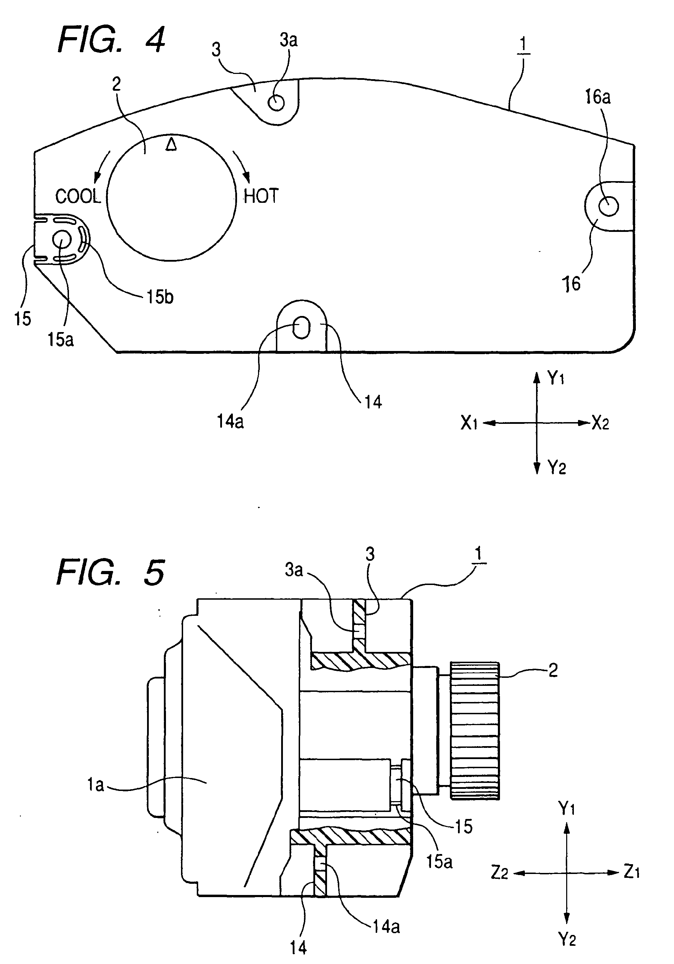

Fig. 4 is a plan view of the panel unit according to a second embodiment of the present invention, and Fig. 5 is a left side view of the panel unit. In Figs. 4 and 5, constituent elements corresponding to those of Figs. 1 to 3 are denoted by the same reference numerals.

The mounting pieces 4, 5 and 6 among the mounting pieces 3 to 6 are formed to protrude outward from the side of the housing 1 in the above-described first embodiment. On the other hand, in the present embodiment, instead of the mounting pieces 4, 5 and 6, mounting pieces 14, 15 and 16 are formed by making portions of the housing 1 such as the mounting piece 3 slim, as shown in Figs. 4 and 5. Further, through holes 14a, 15a and 16a for fixing a spring in the center portion of the mounting pieces 14, 15 and 16 are formed. An intermittent groove 15b is intermittently formed though a peripheral part of the mounting piece 15, and the intermittent groove 15b functions the same as the V-shaped groove 5b formed on the mounting piece 5 of the first embodiment.

The same effect as that of the first embodiment can be obtained from the panel unit having the above construction. However, since every mounting piece is formed to protrude from the side surface of the housing 1, arrangement area can be reduced when the housing 1 is assembled into the instrument panel 8.

In the respective embodiments, the groove formed in the mounting piece 5 and the mounting piece 15 is the V-shaped groove 5b and the intermittent groove 15b. However, for example, other grooves such as a U-shaped groove other than the V-shaped groove and the intermittent groove may be formed, and the groove may be continuous and discontinuous.

In the respective embodiments, the present invention is applied to the panel unit for adjusting temperature of an air-conditioner system. However, the application of the present invention is not limited thereto; for example, the application of the present invention may be applied to a panel unit for adjusting an electric equipment for another automobile such as an audio system.

In the panel unit having the above structure, when the housing, which has a plurality of mounting pieces and is made of synthetic resin, is molded by molds, even though flatnesses of fixing surfaces coming in contact with the supporting members of the mounting pieces having the grooves deteriorate, flatnesses of only some of the mounting pieces deteriorate. For this reason, it is possible to ensure flatnesses of the other mounting pieces not having the grooves. Therefore, when each of the mounting pieces is fixed to the supporting members of the vehicle, the mounting accuracy can be practically managed by the mounting pieces not having the grooves and thus the mounting accuracy of the housing can be improved. In addition, even though only some of the plurality of mounting pieces is provided with grooves, the grooves can be certainly ruptured at a time when a pressure over a predetermined value is applied on the mounting pieces by appropriately adjusting depth of the grooves. Accordingly, it is possible to insure safety at the time of a collision or sudden braking of a vehicle.

## Claims

1. A panel unit comprising:
a housing (1);
a protruding member provided on the housing (1); and
a plurality of mounting pieces (4, 5, 6; 14, 15, 16) which are disposed around the protruding member and are integrally formed on side faces of the housing (1), the housing (1) being mounted in a vehicle so that the protruding member is exposed to an interior of the vehicle by fixing the mounting pieces (4, 5, 6; 14, 15, 16) to respective supporting members of a vehicle;
**characterized in that** only one or some of the plurality of mounting pieces (4, 5, 6; 14, 15, 16) is or are provided with a groove or grooves (5b), and the grooves (5b) are ruptured at a time when a pressure over a predetermined value is applied on the protruding member so that the housing (1) can be buried in a direction in which the pressure is applied that a backplate (8) of the vehicle is provided on the back side of the housing (1), and
that the mounting pieces (4 and 6) not provided with the grooves (5b) are disposed on the opposite side to the mounting piece or pieces (5) provided with the grooves (5b) across the protruding member, and a chamfer portion is provided on a lower surface of the housing (1) in the vicinity of the mounting pieces (5) provided with the grooves (5b).

2. The panel unit according to claim 1,
**characterized in that** only the mounting piece or pieces (5) in the vicinity of the protruding member are provided with the grooves (5b).

## Patentansprüche

1. Tafeleinheit, aufweisend:
ein Gehäuse (1);
ein an dem Gehäuse (1) vorhandenes hervorstehendes Element; und
eine Mehrzahl von Befestigungsstücken (4, 5, 6; 14, 15, 16), die um das hervorstehende Element herum angeordnet sind und an Seitenflächen des Gehäuses (1) in integraler Weise ausgebildet sind, wobei das Gehäuse (1) in einem Fahrzeug derart angebracht ist, dass das hervorstehende Element zu einem Innenraum des Fahrzeugs hin freiliegt, indem die Befestigungsstücke (4, 5, 6; 14, 15, 16) an jeweiligen Halterungselementen eines Fahrzeugs befestigt sind;
**dadurch gekennzeichnet, dass** nur eines oder einige der mehreren Befestigungsstücke (4, 5, 6; 14, 15, 16) mit einer Nut oder Nuten (5) versehen ist bzw. sind, und dass die Nuten (5b) zu einem Zeitpunkt brechen, wenn ein über einem vorbestimmten Wert liegender Druck auf das hervorstehende Element aufgebracht wird, so dass das Gehäuse (1) in einer Richtung, in der der Druck aufgebracht wird, versenkt werden kann,
dass eine Rückenplatte (8) des Fahrzeugs an der Rückseite des Gehäuses (1) vorgesehen ist, und
dass die nicht mit den Nuten (5b) versehenen Befestigungsstücke (4 und 6) - bezogen auf die Zwischenposition des hervorstehenden Elements - auf der gegenüberliegenden Seite zu dem oder den mit den Nuten (5b) versehenen Befestigungsstücken angeordnet sind und ein Abschrägungsbereich an einer unteren Oberfläche des Gehäuses (1) in der Nähe der mit den Nuten (5b) versehenen Befestigungsstücke (5) vorgesehen ist.

2. Tafeleinheit nach Anspruch 1,
**dadurch gekennzeichnet, dass** nur das oder die Befestigungsstücke (5) in der Nähe des hervorstehenden Elements mit den Nuten (5b) versehen sind.

## Revendications

1. Panneau unitaire comprenant:
un boîtier (1) ;
un élément saillant prévu sur le boîtier (1); et
une pluralité de pièces de montage (4, 5, 6 ; 14, 15, 16) qui sont disposées autour de l'élément saillant et sont formées d'un seul tenant sur des faces latérales du boîtier (1), le boîtier (1) étant monté dans un véhicule de telle manière que l'élément saillant est exposé à l'intérieur du véhicule en fixant les pièces de montage (4, 5, 6 ; 14, 15, 16) sur des éléments de support respectifs d'un véhicule ;
**caractérisé en ce que** seulement une ou certaines des pièces de montage (4, 5, 6 ; 14, 15, 16) est ou sont pourvue(s) d'une ou de plusieurs rainure(s) (5b), et les rainures (5b) sont rompues à un moment où une pression supérieure à une valeur prédéterminée est appliquée sur l'élément saillant, de sorte que le boîtier (1) peut être enfoncé dans une direction dans laquelle la pression est appliquée,
**en ce qu'**une plaque arrière (8) du véhicule est placée à l'arrière du boîtier (1), et
**en ce que** les pièces de montage (4 et 6) non pourvues de rainures (5b) sont disposées du côté opposé à la ou les pièce(s) de montage (5) pourvue(s) des rainures (5b) par rapport à l'élément saillant, et une partie chanfreinée est prévue sur une surface inférieure du boîtier (1) au voisinage des pièces de montage (5) pourvues des rainures (5b).

2. Panneau unitaire selon la revendication 1, **caractérisé en ce que** seule(s) la ou les pièce(s) de montage au voisinage de l'élément saillant est/sont pourvue(s) des rainures (5b).
